# DEMANDE DE BREVET EUROPEEN

(11) **EP 1 191 654 A1**
(43) Date de publication de la demande: **27.03.2002**
(21) Numéro de dépôt: 01420200.6
(22) Date de dépôt: 26.09.2001
(51) Int. Cl.: H02G 3/04

(54) **Conduit d'installation d'un câble électrique, et procédé de contrôle de l'isolation électrique du câble installé**

(30) Priorité: 26.09.2000 FR 0012227
(71) Demandeur: Novoplastic, 01200 Bellegarde sur Valserine (FR)
(72) Inventeur: Trichard, M. Claude, 60480 Saint Andre Farivillers (FR)
(74) Mandataire: Bratel, Gérard

(57) **Abrégé**

Conduit (1) d'installation d'au moins un câble électrique (2), ayant sensiblement la même section selon au moins une partie de sa longueur, ladite section ménageant une cavité (3) étanche par rapport à l'extérieur dudit conduit, pour la réception libre dudit câble électrique, ledit conduit étant constitué au moins par une matrice d'un matériau synthétique tel qu'une matière plastique, à la fois suffisamment souple pour permettre d'enrouler puis de dérouler ledit conduit, et suffisamment rigide pour que ledit conduit résiste à un effort radial centripète ou centrifuge. Une pluralité d'électrodes (4) internes de décharge, allongées selon la longueur dudit conduit, sont distribuées autour de ladite cavité (3), et noyées chacune dans ladite matrice, en sorte qu'une face (4a) ou génératrice interne de chaque électrode, électriquement continue selon la longueur dudit conduit, est directement en contact électrique avec une solution ionisée emplissant ladite cavité.

## Description

La présente invention concerne de manière générale, les conduits d'installation de câbles électriques.

Conformément au document WO 98/42052, on a décrit un conduit d'installation, par exemple d'un câble électrique, ayant sensiblement la même section selon au moins une partie de sa longueur, cette section ménageant une cavité étanche par rapport à l'extérieur dudit conduit, pour la réception libre du câble électrique. Ce conduit est constitué au moins par une matrice d'un matériau synthétique tel qu'une matière plastique, ce matériau étant en relation avec la forme et les dimensions retenues, à la fois suffisamment souple pour permettre d'enrouler, puis dérouler, le conduit d'installation vide, et suffisamment rigide, pour que ledit conduit résiste à un effort radial centripète ou centrifuge, par exemple lorsqu'il est enterré.

La présente invention s'intéresse au conduit d'installation tel que précédemment défini, et en particulier au conduit d'installation de câble électrique de très hautes tensions, et par conséquent de puissance.

Dans ce contexte, un problème essentiel pour la sécurité et le fonctionnement du câble électrique installé, concerne le contrôle de l'isolation électrique de ce dernier. En effet, la mise en place du câble électrique dans son conduit d'installation, par différentes méthodes, telles que tirage et poussage, est susceptible d'endommager la gaine ou les éléments d'isolation électrique du câble, sans que ce ou ces défauts d'isolation puissent être détectés une fois que le câble est installé.

De manière générale, la présente invention vise à résoudre ce problème, ayant une acuité particulière pour les câbles de haute puissance, par exemple supérieure ou égale à 70 000 volts, ayant des poids linéaires relativement élevés, par exemple de l'ordre de 8 à 35 kg par mètre, et requérant de ce fait des forces importantes, par exemple de l'ordre de 2,5 à 6 tonnes pour des tronçons de 300 à 1500 m, pour leur mise en place à l'intérieur de conduits d'installation.

Le problème précédemment exposé est résolu selon l'invention, en deux temps.

Tout d'abord, la présente invention propose un conduit d'installation tel que précédemment défini, comprenant une pluralité d'électrodes internes de décharge, allongées selon la longueur du conduit, distribuées autour de la cavité de réception libre du câble électrique. Ces électrodes sont noyées chacune dans la matrice du matériau synthétique constituant en général de manière monobloc le conduit d'installation, en sorte qu'une face ou génératrice interne de chaque électrode, électriquement continue, selon la longueur du conduit d'installation, est directement en contact électrique avec tout fluide, par exemple un liquide emplissant la cavité de réception, du type solution ionisée emplissant la cavité de réception formée par le conduit.

Par "électriquement continue", on entend la caractéristique selon laquelle l'électrode se comporte électriquement, selon toute sa longueur, comme un seul et même conducteur électrique.

Selon l'invention, chaque électrode est constituée d'un matériau dit semi-conducteur, ayant généralement une résistivité intermédiaire entre celle d'un métal ou alliage métallique, et celle d'une matière plastique, par exemple une résistivité inférieure à 10⁸ Ohm.cm

Grâce au conduit d'installation précédemment défini, on peut alors mettre en oeuvre le procédé de contrôle suivant de l'isolation électrique du câble installé dans ledit conduit :
- on établit une différence de potentiel électrique adaptée à une décharge ou claquage diélectrique en cas de défaut d'isolation électrique dudit câble, entre, d'une part le conducteur électrique du câble installé, et d'autre part toutes les électrodes de décharge du conduit d'installation, par l'intermédiaire de la solution ionisée ;
- et tout défaut d'isolation électrique conduit à un claquage, pouvant être facilement identifié, en particulier par la voie sonore.

Préférentiellement, d'une part des particules d'un lubrifiant de nature solide sont distribuées dans la matrice constitutive du conduit d'installation, en affleurant au moins pour partie au niveau de la surface libre de la couche superficielle en regard de la cavité de réception du câble électrique, et d'autre part un lubrifiant de nature liquide est distribué dans la couche superficielle précitée, pratiquement sans mouiller la surface libre de cette dernière.

Pour des conduits d'installation de fort diamètre intérieur, par exemple supérieur à 80 mm et pouvant aller jusqu'à 500 mm, la solution complémentaire précédemment définie permet de réduire le coefficient de frottement du câble contre le conduit d'installation, dans des proportions importantes, et de l'amener à une valeur faible, par exemple de l'ordre de 0,01. Ceci permet de diminuer ou limiter les efforts requis, par exemple de traction, pour la mise en place du câble au sein du conduit d'installation, en supprimant au passage les risques d'accident des personnes manipulant lesdits câbles lors de leur installation.

La présente invention est maintenant décrite par référence au dessin annexé, dans lequel :
- **la figure 1** représente en coupe transversale, un conduit d'installation selon l'invention, dans lequel est disposé un câble électrique ;
- **la figure 2** est une vue agrandie d'une partie du conduit d'installation représenté à la figure 1 ;
- **la figure 3** est une vue en coupe transversale et médiane d'un raccord permettant d'abouter de manière mécaniquement rigide et étanche, deux éléments de conduit d'installation conformes à l'invention ; sur cette figure, les conduits d'installation ainsi aboutés sont montrés en traits mixtes ;
- **la figure 4** représente une vue à échelle agrandie d'une partie du raccord montré à la figure 3 ;
- **la figure 5** représente un exemple d'embout d'injection d'eau et d'introduction de câble, dans un conduit d'installation selon l'invention.

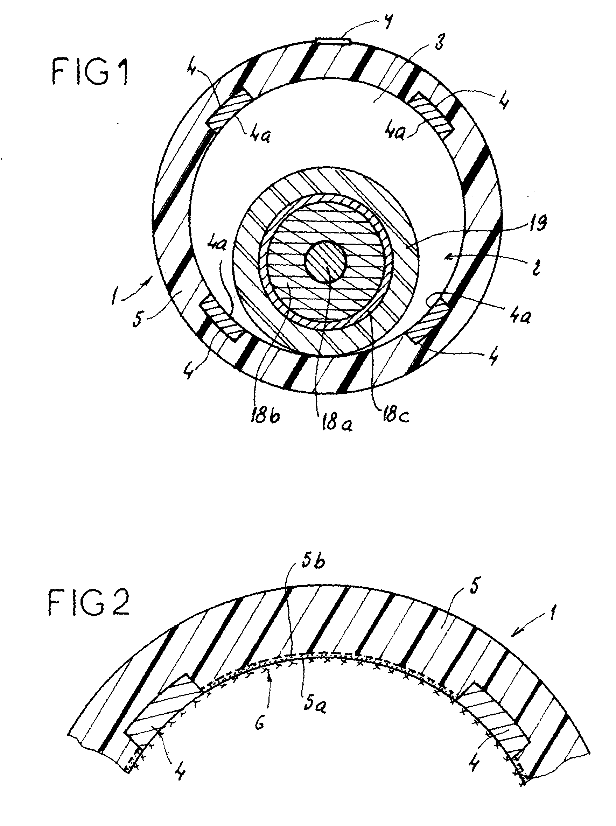

Selon la figure 1, le conduit 1 permet donc d'installer au moins un câble électrique 2, par exemple de forte puissance, comportant de manière générale une pluralité de conducteurs électriques 18a, 18c. Un tel câble électrique 2 est par exemple constitué d'une âme conductrice 18a, noyée dans un matériau isolant 18b, lui-même entouré d'un blindage conducteur 18c, par exemple en aluminium. Le blindage conducteur 18c est par ailleurs protégé par une gaine isolante 19 par exemple en polyéthylène.

Le conduit 1 a sensiblement la même section selon au moins une partie de sa longueur, cette section ménageant une cavité 3 étanche par rapport à l'extérieur dudit conduit, pour recevoir de manière libre le câble électrique 2.

De manière traditionnelle, le conduit 1 d'installation est constitué par une matrice d'un matériau synthétique tel qu'une matière plastique, par exemple polyéthylène haute densité (PEHD). En relation avec la forme et le dimensionnement retenus pour le conduit d'installation, en particulier, pour sa section transversale, le matériau synthétique retenu est à la fois suffisamment souple pour permettre d'enrouler puis dérouler le conduit 1 d'installation, et suffisamment rigide pour que ce même conduit résiste à un effort radial centripète ou centrifuge.

Comme le montre la figure 1, une pluralité, en l'occurrence quatre électrodes 4 internes de décharge, disposées en position allongée selon la longueur du conduit, sont distribuées autour de la cavité 3 de réception, et noyées chacune dans la matrice plastique, en sorte qu'une face 4a ou génératrice interne de chaque électrode, électriquement continue selon la longueur dudit conduit, est directement en contact électrique avec toute solution ionisée emplissant la cavité 3.

L'utilisation d'une pluralité d'électrodes de décharges permet de se rapprocher au mieux d'une configuration où un éventuel défaut dans la gaine isolante 19 se situe en regard de l'une des électrodes de décharge. On optimise ainsi le parcours d'une éventuelle décharge électrique à travers la solution ionisée.

Selon différentes variantes d'exécution, trois ou quatre électrodes 4 de décharge sont distribuées autour de la cavité 3 de réception du câble électrique 2, par exemple sont disposées angulairement à 120° ou 90° les unes des autres, autour de l'axe de la cavité 3 de réception du câble électrique.

Préférentiellement, chaque électrode 4 de décharge a une section transversale quadrangulaire, par exemple rectangulaire.

Chaque électrode 4 est constituée par un matériau dit semi-conducteur ayant généralement une résistivité intermédiaire entre celle d'un métal ou alliage métallique, et celle d'une matière plastique traditionnelle, par exemple une résistivité comprise entre 0,01 et 10⁸ Ohm.cm. Le matériau semi-conducteur est par exemple du noir de carbone.

Un tel matériau peut être obtenu au moment de l'extrusion du conduit d'installation, en dopant de manière particulière la matière plastique à l'état liquide, à l'endroit même retenu dans la filière d'extrusion pour l'obtention des électrodes de décharge recherchées. Cette technique présente l'avantage de ne pas augmenter de façon notoire la complexité du procédé d'extrusion du conduit 1 d'installation. On obtient ainsi directement et linéairement l'effet semi-conducteur par le dopage du PEHD.

L'avantage lié à l'utilisation d'électrodes de décharge réalisées avec une matière semi-conductrice est qu'elles présentent une résistance électrique élevée. Cette dernière permet de réduire substantiellement l'intensité du courant de claquage circulant dans les électrodes en cas de décharge ou claquage diélectrique. On évite ainsi un échauffement trop important ou dommageable pour les électrodes, et par conséquent pour le conduit d'installation. L'intensité du courant de claquage suffit cependant pour l'obtention de l'effet sonore lié à une décharge.

Préférentiellement, et comme montré par la figure 2, d'une part des particules 6 d'un lubrifiant de nature solide sont distribuées dans la matrice, c'est-à-dire dans la paroi 5 du conduit d'installation, en affleurant au moins pour partie au niveau de la surface libre 5a de la couche superficielle 5b, en regard de la cavité de réception 3 du câble électrique, et d'autre part un lubrifiant de nature liquide, par exemple du type silicone, est distribué dans la couche superficielle 5b, pratiquement sans mouiller la surface libre de cette dernière.

Par exemple, le lubrifiant liquide a une viscosité au plus égale à 1000 centistokes, à température ambiante, et les particules du lubrifiant solide sont des microbilles ayant un diamètre au plus égal à 20 µm, par exemple en graphite.

Comme le montre la figure 1, une bande 7 visible extérieurement, d'indexation angulaire, est disposée dans une position angulaire prédéterminée par rapport à chacune des électrodes 4 de décharge.

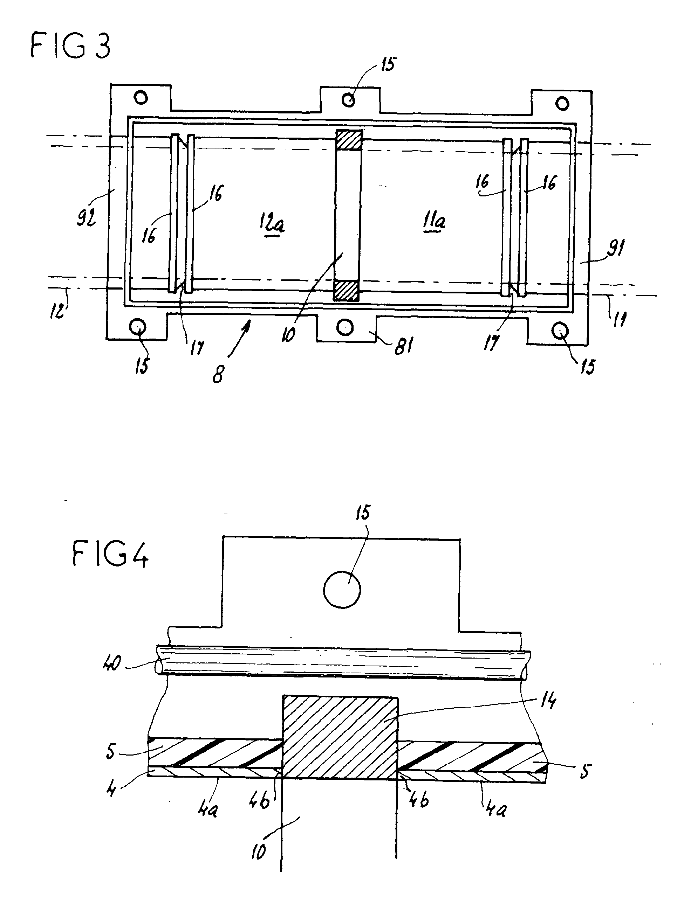

Bien entendu, en pratique, pour constituer une conduite d'installation, il est nécessaire de raccorder plusieurs éléments, par exemple 11 et 12 de conduit tels que précédemment décrits et définis. A cette fin, on met en oeuvre selon l'invention un raccord, tel que représenté par les figures 3 et 4.

Ce raccord comprend deux embouts 91, 92, communiquant l'un avec l'autre, pour l'emmanchement dur, mécaniquement résistant en traction par exemple, et étanche, de deux bouts 11a, 12a adjacents, appartenant à deux éléments 11 et 12 respectivement du conduit d'installation.

Ce raccord comprend une bague 10 semi-conductrice, par exemple un caoutchouc semi-conducteur ou métallique, disposée entre les deux embouts 91 et 92, en sorte que dans la position emmanchée (cf. figure 4) des deux bouts 11 et 12, les extrémités 4b correspondantes des électrodes de décharge 4 appartenant de part et d'autre aux éléments de conduit 11 et 12 respectivement, soit chacune en contact électrique avec la bague 10.

On obtient ainsi une continuité électrique de toutes les électrodes 4, d'une part selon toute la longueur du conduit 11 d'installation constitué par l'assemblage raccordé d'une multiplicité d'éléments tels que 11 et 12, et d'autre part entre les électrodes 4 elles-mêmes.

En pratique, le raccord comporte deux coquilles 81 et 82 complémentaires, ménageant entre elles dans leur position montée l'une sur l'autre, d'une part un logement 14 transversal et intermédiaire pour la bague 10, et d'autre part les deux dits embouts 91 et 92. Des moyens de serrage 15, par exemple du type vis-boulon, sont prévus entre les deux coquilles dans leur position montée l'une sur l'autre.

Comme le montre la figure 3, deux lèvres annulaires 17, disposées et émergeant à l'intérieur des deux embouts 91 et 92 respectivement, du côté extérieur du raccord 8, permettent d'incruster la matière du raccord, par exemple la matière plastique de ce dernier, dans celle des éléments raccordés, 11 et 12, du conduit d'installation, et ce à l'extérieur de ces derniers. A cette fin, la matière des lèvres annulaires 17 qui se trouve repoussée lors de l'emmanchement des deux bouts 11a et 12a respectivement, est absorbée par deux alésages 16 adjacents à chacune des lèvres 17 annulaires.

Un joint torique 40 par exemple en caoutchouc, permet d'assurer l'étanchéité du raccord, c'est-à-dire dans la position montée des deux coquilles 81 et 82, par rapport à l'extérieur.

De manière générale, un tel raccord apporte de nombreux avantages par rapport aux méthodes traditionnelles de raccordement de conduits d'installation pour câbles électriques de puissance :
- par rapport à une soudure dite "au miroir", on diminue et simplifie dans des proportions considérables la méthode de raccordement ;
- par rapport à la mise en oeuvre de raccords électrosoudables, on a plus besoin de mettre en oeuvre un générateur électrique, et la question du positionnement correct des éléments de conduit à raccorder ne se pose plus ;
- par rapport à un raccordement par vissage, le raccord selon l'invention peut être utilisé pour des éléments de conduit beaucoup plus longs.

Une fois que le câble électrique est installé dans une conduite constituée d'une multiplicité d'éléments tels que précédemment décrits, raccordés comme indiqué ci-dessus, on peut contrôler l'isolation électrique dudit câble en établissant une différence du potentiel électrique entre, d'une part le blindage conducteur 18c du câble 2, et d'autre part toutes les électrodes 4 de décharge, cette différence de potentiel étant adaptée à une décharge ou claquage diélectrique. Une éventuelle décharge se produit alors à travers le fluide contenu dans la cavité 3 (solution ionisée saline par exemple) et provoque l'éclatement du blindage conducteur 18c, constituant ainsi un indicateur sonore. En cas de décharge, le câble électrique 2 est alors retiré du conduit 1 et remplacé.

Préférentiellement, aux fins de ce contrôle, on emplit la cavité 3 du conduit d'installation avec une solution ionisée ou un milieu liquide faiblement conducteur, par exemple une saumure ou de l'eau salée, éventuellement additionnée d'un agent tensioactif. Cette solution permet également de par sa densité, de diminuer le poids apparent du câble 2 lors de son installation. Le risque de détériorer ou de réduction d'épaisseur de la gaine isolante 19 liée aux frottements, est alors réduit.

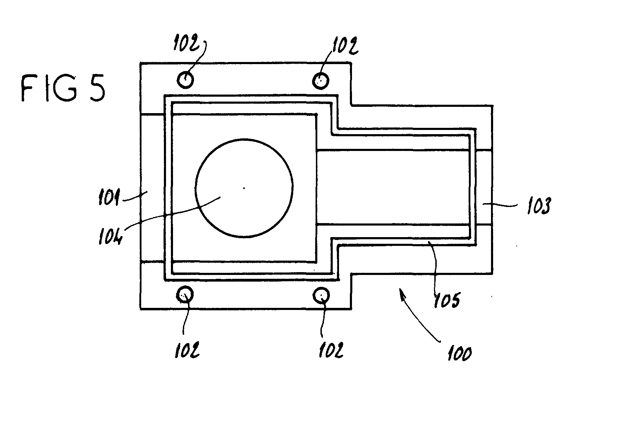

La figure 5 représente un embout 100 d'injection d'eau et d'introduction du câble, dans un conduit d'installation selon l'invention. L'embout 100 est constitué de deux demi-coquilles, (dont une est représentée à la figure 5), qui une fois assemblées définissent un corps sensiblement cylindrique et creux. Ce dernier présente une première ouverture 101 destinée à être montée sur l'extrémité du conduit 1. Des moyens de serrage 102 assurant à la fois le montage sur le conduit 1 et l'assemblage des deux demi-coquilles constitutives de l'embout 1 sont prévus à cet effet. Une deuxième ouverture 103 est prévue sur l'embout 100 pour l'introduction du câble 2. La deuxième ouverture 103 présente un diamètre adapté au diamètre du câble 2 et débouche dans la partie creuse formée par la première ouverture 101. Un orifice complémentaire et latéral 104 est prévu pour mettre en communication le volume intérieur de la première ouverture 101 et l'intérieur du conduit 1, avec une source de fluide, par exemple de l'eau salée, de manière à maintenir le conduit 1 sous pression. Un joint torique 105 est également disposé dans le plan jointif des deux demi-coquilles constitutives de l'embout 100.

## Revendications

1. Conduit (1) d'installation d'au moins un câble électrique (2), ayant sensiblement la même section selon au moins une partie de sa longueur, ladite section ménageant une cavité (3) étanche par rapport à l'extérieur dudit conduit, pour la réception libre dudit câble électrique, ledit conduit étant constitué au moins par une matrice d'un matériau synthétique tel qu'une matière plastique, à la fois suffisamment souple pour permettre d'enrouler puis de dérouler ledit conduit, et suffisamment rigide pour que ledit conduit résiste à un effort radial centripète ou centrifuge, le conduit comportant une pluralité d'électrodes (4) internes de décharge, allongées selon la longueur dudit conduit, sont distribuées autour de ladite cavité (3), et noyées chacune dans ladite matrice, en sorte qu'une face (4a) ou génératrice interne de chaque électrode, électriquement continue selon la longueur dudit conduit, est directement en contact électrique avec tout fluide, par exemple une solution ionisée emplissant ladite cavité, **caractérisé en ce que** chaque électrode (4) est constituée par un matériau dit semi-conducteur, ayant généralement une résistivité intermédiaire entre celle d'un métal ou alliage métallique, et celle d'une matière plastique, par exemple une résistivité inférieure à 10⁸ Ohm.cm.

2. Conduit selon la revendication 1, **caractérisé en ce que** trois électrodes (4) de décharge sont distribuées autour de la cavité (3) de réception du câble électrique (2), par exemple sont disposées angulairement à 120° les unes des autres, autour de l'axe de ladite cavité.

3. Conduit selon la revendication 1, **caractérisé en ce que** quatre électrodes (4) de décharge sont distribuées autour de la cavité (3) de réception du câble électrique, par exemple sont disposées angulairement à 90 °les unes des autres, autour de l'axe de ladite cavité.

4. Conduit selon l'un quelconque des revendications 1 à 3, **caractérisé en ce que** chaque électrode (4) de décharge a une section quadrangulaire, par exemple rectangulaire.

5. Conduit selon la revendication 1, **caractérisé en ce que**, d'une part des particules (6) d'un lubrifiant de nature solide sont distribuées dans la matrice, en affleurant au moins pour partie au niveau de la surface libre (5a) de la couche superficielle (5b) en regard de la cavité de réception (3) du câble électrique, et d'autre part un lubrifiant de nature liquide est distribué dans ladite couche superficielle, pratiquement sans mouiller la surface libre de cette dernière.

6. Conduit selon la revendication 1, **caractérisé en ce qu'**il comprend une bande (7) visible extérieurement, d'indexation angulaire prédéterminée par rapport à chacune des électrodes (4) de décharge.

7. Raccord (8) pour deux éléments (11, 12) de conduit selon la revendication 1, comprenant deux embouts (91, 92) communiquant l'un avec l'autre, pour l'emmanchement dur et étanche de deux bouts (11a, 12a) adjacents appartenant aux deux dits éléments (11, 12) respectivement, **caractérisé en ce qu'**il comprend une bague (10) semi-conductrice disposée entre les deux embouts (91, 92) en sorte que, dans la position emmanchée (cf. figure 4) des deux dits bouts, les extrémités (4b) correspondantes des électrodes de décharge appartenant aux dites électrodes de décharge appartenant aux dits éléments de conduit (11, 12) respectivement soient chacune en contact électrique avec ladite bague (10).

8. Raccord selon la revendication 7, **caractérisé en ce qu'**il comporte deux coquilles (81, 82) complémentaires ménageant entre elles, dans leur position montée l'une sur l'autre, d'une part un logement (14) transversal, et d'autre part les deux dits embouts (91, 92), ainsi que des moyens de serrage (15) des deux coquilles dans leur position montée l'une sur l'autre.

9. Raccord selon la revendication 8, **caractérisé en ce que** deux lèvres (17) annulaires d'incrustation sont disposées et émergent à l'intérieur des deux embouts (91, 92) respectivement, du côté extérieur du raccord (8).

10. Procédé de contrôle de l'isolation électrique d'un câble (2) comportant au moins un conducteur (18) électrique, installé au moins pour partie dans un conduit (1) selon l'une quelconque des revendications 1 à 6, **caractérisé en ce qu'**on établit une différence de potentiel électrique adaptée à une décharge ou claquage diélectrique, en cas de défaut d'isolation électrique dudit câble, entre d'une part le conducteur électrique (18) du câble, et d'autre part toutes les électrodes (4) de décharge.

11. Procédé selon la revendication 10, **caractérisé en ce qu'**aux fins du contrôle, on emplit la cavité (3) du conduit d'installation avec un milieu liquide faiblement conducteur, par exemple une saumure ou de l'eau salée, ou toute solution ionisée éventuellement additionnée d'un agent tensioactif.
